# EUROPEAN PATENT APPLICATION

(11) **EP 2 177 894 A1**
(43) Date of publication of application: **21.04.2010**
(21) Application number: 08166539.0
(22) Date of filing: 14.10.2008
(51) Int. Cl.: G01N 17/02

(54) **Mountable electrode**

(71) Applicant: Nederlandse Organisatie voor Toegepast- Natuurwetenschappelijk Onderzoek TNO, 2628 VK Delft (NL)
(72) Inventor: Bos, Tom, 1087 HW Amsterdam (NL); Buter, Sibo, 1722 GA Zuid-Scharwoude (NL); Schrauwen, Cornelis Petrus Gerardus, 6662 NB Elst (NL)
(74) Representative: Hatzmann, Martin

(57) **Abstract**

The invention is directed to a mountable electrode, methods for preparing said mountable electrode, a method for monitoring the corrosion protective properties of a coating on a metal substrate, an apparatus for measuring electrochemical impedance spectroscopy of coated metal substrates, and the use of said mountable electrode.

The mountable electrode of the invention comprises
- a carrier comprising a water-soluble layer; and
- a water-permeable pattern of an inert metal on said water-soluble layer.

## Description

The invention is directed to a mountable electrode, methods for preparing said mountable electrode, a method for monitoring the corrosion protective properties of a coating on a metal substrate, an apparatus for measuring electrochemical impedance spectroscopy of coated metal substrates, and the use of said mountable electrode.

In a vast number of applications coated metal substrates are subjected to detrimental environmental influences, such as ultraviolet radiation, humidity, oxidation, salt, *etc.* These environmental influences can severely affect the protective performance of the coating. It is therefore imperative to carry out a periodical control on the quality of coatings on metal substrates, such as pipelines, piping, ship hulls, pressure tanks, fuel tanks, ballast tanks, wind farms, sheet piling, bridges, and flood gates. Nevertheless, most of these applications require a quality control in the field. It is impracticable to bring test samples to a laboratory. Accordingly, there is a need in the art for methods of analysing the quality of coatings on metal substrates in the field. Some attempts have been made to design suitable devices for quality control of coated metal substrates in the field.

US-A-5 859 537 describes a method for the early detection of electrochemical corrosion, metal and coating degradation by electrochemical impedance spectroscopy utilising conductive ink deposited on the coating as a counter/reference electrode, and the substrate as a working electrode. The conductive ink is applied in a grid pattern with a small brush through a low adhesive frame mask, which is thereafter removed. An electrical voltage is applied between the substrate and the counter/reference electrode and the resulting current is measured. The application of the conductive ink using a frame mask and a small brush is not practical in the field.

US-B-6 328 878 describes a method for determining coating or substrate degradation in which a first and a second adhesive element, both comprising a conductive foil and a pressure sensitive adhesive, are applied to a coating or substrate in a partially overlapping manner. This arrangement is used for measuring an electrochemical impedance spectrum using the coating or substrate as a working electrode. Nevertheless, the method and device described in US-B-6 328 878 are unsuitable for a long-term monitoring of the coating or substrate, because the device itself protects the covered part of the coating or substrate to be monitored. Hence, the measured part of the coating or substrate is not representative for the degradation of the entire coating or substrate. It is to be expected that the non-measured parts of the coating or substrate will degrade faster, because they remain unprotected.

Hence, the prior art leaves room for improvements and there remains a need for improved methods of analysing the quality of coatings on metal substrates in the field and devices suitable for carrying out such methods.

Object of the invention is to fulfil this need in the art and to provide an electrode which can suitably be mounted in the field.

Further object of the invention is to provide a method and an apparatus for analysing the quality of coatings on metal substrates that do not interfere with the degradation of the substrate to be analysed.

The inventors found that these objects can at least in part be met by a using a patterned water-permeable electrode that can be applied onto a substrate to be analysed from a water-soluble carrier.

Accordingly, in a first aspect the invention is directed to a mountable electrode, comprising
- a carrier comprising a water-soluble layer; and
- a water-permeable pattern of an inert metal on said water-soluble layer.

The electrode of the invention can suitably be used as a counter/reference electrode in an electrochemical impedance spectroscopy measurement in order to analyse the quality of coatings on metal substrates in the field, by adhering the electrode using an adhesive. The electrode of the invention can also be used *e.g.* for measuring electrochemical noise.

The carrier comprises a water-soluble layer. The water-soluble layer can be a multilayer of two or more single water-soluble layers. The carrier can further comprise a water-insoluble layer. Preferably, such a water-insoluble layer is hydrophilic, so that the layer takes up water that can dissolve the water-soluble layer. This can facilitate the dissolution of the water-soluble layer for a measurement.

After being mounted on a coated metal substrate the mountable electrode of the invention can be rendered operative by removing the water-soluble layer. This can simply be achieved by wetting the electrode and thereby dissolving the water-soluble layer. In case the carrier further comprises a water-insoluble layer, this layer will also come loose, because the water-insoluble layer is attached to the metal layer through the water-soluble layer. If necessary, the water-insoluble layer can be removed by sliding it off the metal layer upon wetting the electrode and thereby dissolving the water-soluble layer.

The inventors surprisingly found that when the mountable electrode of the invention is used for electrochemical impedance spectroscopy measurements it does not, or hardly, interfere with the degradation characteristics of the substrate on which it is attached. The mountable electrode of the invention, which can advantageously remain on the substrate in between different measurements over a longer period of time, was found to give results that are comparable to electrochemical cells that are only applied onto the substrate upon inspection. This demonstrates the high potential of the mountable electrode of the invention, which can be applied to a certain substrate being subject to environmental degradation and be used to periodically measure the corrosion protective properties of the coating. Connecting the electrode to a computer control can make periodical inspections by personnel with a portable device obsolete.

The water-soluble layer can be in the form of a water-soluble foil. Typically, the water-soluble layer has a thickness of 0.5 mm or less, preferably 0.2 mm or less. Preferably, the thickness of the water-soluble layer is at least 10 µm, more preferably at least 30 µm, such as 100 µm. If the thickness of the layer is more than 0.5 mm, then it will take rather long before the layer dissolves and exposes the metal pattern.

The water-soluble layer can suitably comprise a water-soluble polymer. Suitable examples of water-soluble polymers include polyacrylic acids, polyethylene glycols, polyvinyl ethers, polyvinyl acetates (such as partially hydrolysed polyvinyl acetate), polyvinyl alcohols, polyvinyl alcohol maleic acid copolymer, water-soluble acrylic polymers (such as water-soluble polyacrylates, polyacrylamides, and acrylic maleic anhydride copolymers), water-soluble polyesters, polyamines, polyvinyl pyrrolidone, alkyl celluloses (such as methylcellulose, ethylcellulose, propylcellulose and derivatives thereof, such as the ethers and esters of alkyl celluloses), polyethylene amine and copolymers and blends thereof. Naturally occurring water soluble polymers include carbohydrates (such as dextrins or starch derived from different plant sources, including high amylose and high amylopectin varieties), natural polysaccharide gums and their derivatives, casein, gelatin, and solubilised proteins. Also a layer of modified pectine, such as described in EP-A-1 757 279, which is herewith incorporated by reference, can be used. Preferred water-soluble polymers are polyacrylic acid, polyvinyl alcohol, and polyvinyl alcohol maleic acid copolymer.

Preferably the water-soluble layer comprises a colorant. This allows an easy determination of whether the carrier is removed from the metal pattern when the electrode is to be used for a measurement.

The water-permeable pattern is an electrode pattern and can be any kind of pattern that allows water to penetrate through the pattern. The pattern can *e.g*. be in the form of a grid or matrix, a perforated layer, a set of parallel lines, a comb structure (such as an intersecting comb structure), concentric circles, *etc.*

The metal pattern incompletely covers the water-soluble layer, thereby allowing environmental influences, such as water, to penetrate the metal pattern and access the substrate to be measured. In a preferred embodiment, the metal pattern covers the surface area of the water-soluble layer for at most 60 %, preferably for at most 50 %, even more preferably for at most 40 %.

It is preferred that the inert metal is a noble metal. The inert metal can suitably be selected from the group consisting of gold, iridium, palladium, platinum, rhenium, rhodium, and ruthenium. More preferably, the inert metal is selected from the group consisting of gold palladium, and platinum.

The mountable electrode of the invention may be prepared in a number of ways. Accordingly, the invention is also directed to methods for preparing the mountable electrode of the invention.

In an embodiment, the mountable electrode of the invention can be prepared by a method comprising
- providing a carrier comprising a water-soluble layer;
- providing a desired pattern in negative on the water-soluble layer with an oil; and
- metallising oil-free surface of the water-soluble layer with an inert metal using a vacuum metal deposition technique.

According to this method the desired pattern is provided in negative on the water-soluble layer with an oil. Suitable oils are e.g. low viscous oils that are designed for use in diffusion and other vacuum pumps, such as silicon oils and fluorine-containing oils. The oil can for instance be printed using conventional printing techniques, such as inkjet printing or screen printing. As a result, an oil-free positive of the desired pattern remains on the water-soluble layer of the carrier.

In the metallising step, an inert metal is deposited on oil-free surface of the water-soluble carrier. The metal can for instance be deposited by vapour deposition (such as chemical vapour deposition or physical vapour deposition) or by sputtering. The metal selectively deposits on the oil-free regions of the water-soluble carrier, thereby metallising the desired pattern. In an embodiment the metal deposition is stopped when there is no more oil. The presence of oil can for example be monitored using mass spectroscopy on the specific oil molecules. Also monitoring of the pressure can be used as a rough method for determining whether the oil has run out. Hence, advantageously the process can be carried out such that no remnant oil needs to be removed.

In a further aspect the invention is directed to a method for monitoring the corrosion protective properties of a coating on a metal substrate, comprising
- providing a layer of adhesive on the water-permeable pattern of the inert metal in the mountable electrode according to any one of claim 1-7;
- attaching the mountable electrode of the invention onto the coated metal substrate with the layer of adhesive onto the coated metal substrate;
- removing the carrier by dissolving the water-soluble layer; and
- determining the corrosion protective properties of said coating on said substrate by measuring the electrochemical impedance.

Extraction of the properties of the coating from the electrochemical impedance measurements is for instance described in the PhD thesis of Tom Bos (Tom Bos ("Prediction of coating durability, early detection using electrochemical methods", Technical University of Delft, 11 March 2008, ISBN 978-90-9022815-0)

The layer of adhesive is present on top of the metal pattern and allows a simple attachment of the mountable electrode onto the substrate to be measured. It is not required that the layer of adhesive is present on the entire electrode. The adhesive can suitably be applied selectively on the metal pattern, so that no (or as little as possible) adhesive is present on locations where the water-soluble layer is exposed through openings in the metal pattern. Also, the metal pattern does not require to be entirely covered with adhesive. Only small amount of adhesive can suffice to provide an effective attachment of the mountable electrode of the invention onto a substrate to be measured.

The adhesive can suitably be a pressure sensitive adhesive, a structural adhesive, or an engineering adhesive. Preferred adhesives are chosen from the group consisting of epoxy based adhesives, polyurethane based adhesives, acrylic based adhesives, cyanoacrylate based adhesives, or combinations thereof. Particularly preferred are epoxy-based adhesives, acrylic based adhesives and adhesives based on combinations of epoxies and acrylics. These adhesives can be processed very well and have excellent adhesion and degradation properties.

In an advantageous embodiment, the adhesive has a viscosity of at least 1 Pa·s at 20 °C, preferably at least 10 Pa·s at 20 °C, as measured by viscosimetry. The handling of adhesives with a relatively high viscosity is in general better than the handling of low viscous adhesives. Moreover, low viscous adhesives can have the tendency to flow into openings of the metal pattern. Nevertheless, viscosities of more than 100 Pa·s at 20 °C, as measured by viscosimetry, are not preferred.

It is not required that the adhesive is electrically conductive. When using the mountable electrode of the invention for electrochemical impedance measurements, the properties of the coating and the adhesive can for example be separated in the Bode or the Nyquist diagram.

In a specific embodiment, the electrode according to the invention can be used to determine the corrosion speed and/or the corrosion mechanism of an uncoated metal substrate. Accordingly, the invention is also directed to a method for measuring the corrosion speed of an uncoated metal substrate comprising
- attaching the mountable electrode of the invention onto a metal substrate with a layer of adhesive;
- removing the carrier by dissolving the water-soluble layer; and
- determining the corrosion speed of said substrate by measuring the electrochemical impedance.

In this embodiment, the resistance and the double layer capacitance of the corrosion reaction that appear in the equivalent circuit can then be used as a measure for the electrochemical active surface, which is representative of the corrosion speed. It is also possible to measure electrochemical noise.

The optionally coated metal substrate can suitably be part of a pipeline, piping, a ship hull, a pressure tank, a fuel tank, a ballast tank, a wind farm, sheet piling, a bridge, or a flood gate. This method for monitoring the corrosion protective properties of a coating on a metal substrate can advantageously be carried out *in situ, i.e.* in the field.

In yet a further aspect the invention is directed to an apparatus for measuring electrochemical impedance spectroscopy of coated metal substrates, said apparatus comprising a mountable electrode according to the invention.

The apparatus can further comprise a function generator and an impedance analyser. A function generator is a device that can generate sinusoidal voltages, or multi-sinus patterns, or even noise. An impedance analyser may be used to measure the current response, both amplitude and phase, in the time or frequency domain. Further the apparatus can comprise a computer that interprets the impedance data, converts the date into equivalent electronic components, and attributes the values to coating properties (such as coating resistance, coating capacity or Yo and n-values of the equivalent constant phase element).

The apparatus can also be used to monitor the coating properties as a function of time. The apparatus even allows predicting when the coating is about to fail. This can be useful for supporting condition based maintenance. Furthermore, it is possible to couple multiple electrodes according to the invention via a multiplexer to an impedance analyser. Multiple impedance analysers can further be connected in a network.

In yet a further aspect the invention is directed to the use of a mountable electrode according to the invention as an electrode in electrochemical impedance spectroscopy.

The invention will now be illustrated by means of the following examples, which are not intended to limit the invention in any way.

### Example 1

A mountable electrode was made by depositing gold (electrodeposition from aqueous gold cyanide electrolyte solution) on a perforated copper foil (which is representative of a perforated gold foil). The perforated pattern was made by punching 6 mm holes in a rectangular pattern (90°) with a stitch of 8 mm. The covered surface area was about 56 %. The gold-plated electrodes were glued to epoxy coated test panels (1008 / 1010 Low Carbon CRS steel) using a two component epoxy adhesive (Bison™ Kombi Snel, two component epoxy adhesive). The test panels are placed in a low/high tide test (cycle time 1 hour, 50 % dry, 50 % immersion in natural seawater, elevated UV exposure) for 3 months. The impedance of the system is measured regularly in immersion, and compared with a regular impedance measurement using the substrate as working electrode, a platinum counter electrode and a Ag/AgCl reference electrode. For comparison a set of test panels with identical electrodes continuously immersed in 3 % NaCl is measured. After 3 months, the electrodes are intact and are able to measure the degeneration of the coating and significant corrosion of the substrate. The results of the mountable electrodes of the invention and the regular electrodes are comparable.

## Claims

1. Mountable electrode, comprising
- a carrier comprising a water-soluble layer; and
- a water-permeable pattern of an inert metal on said water-soluble layer.

2. Mountable electrode according to claim 1, wherein said carrier is water-soluble.

3. Mountable electrode according to claim 1, wherein said carrier further comprises a water-insoluble layer.

4. Mountable electrode according to any one of the preceding claims, wherein said water-soluble layer comprises a water-soluble polymer.

5. Mountable electrode according to claim 4, wherein said water-soluble polymer is selected from the group consisting of polyacrylic acid, polyvinyl alcohol, and polyvinyl alcohol maleic acid copolymer.

6. Mountable electrode according to any one of the preceding claims, wherein said inert metal is a noble metal, preferably selected from the group consisting of palladium, platinum, and gold.

7. Mountable electrode according to any one of the preceding claims, wherein the metal pattern covers the surface area of the water-soluble layer for at most 60 %, preferably for at most 50 %, even more preferably for at most 40 %.

8. Method for preparing a mountable electrode according to any one of the preceding claims, comprising
- providing a carrier comprising a water-soluble layer;
- providing a desired pattern in negative on the water-soluble layer with an oil; and
- metallising oil-free surface of the water-soluble layer with an inert metal using a vacuum metal deposition technique.

9. Method for preparing a mountable electrode according to any one of the preceding claims, comprising
i) providing a carrier comprising a water-soluble layer, said carrier further comprising a layer of inert metal on said water-soluble layer; and
ii) perforating said carrier to provide said carrier with a desired pattern.

10. Method according to claim 9, wherein step i) comprises metallising the water-soluble layer with an inert metal using a vacuum metal deposition technique or a metal printing technique.

11. Method for monitoring the corrosion protective properties of a coating on a metal substrate, comprising
- providing a layer of adhesive on the water-permeable pattern of the inert metal in the mountable electrode according to any one of claim 1-7;
- attaching the mountable electrode onto the coating with the layer of adhesive;
- removing the carrier by dissolving the water-soluble layer; and
- determining the corrosive protective properties of said coating by measuring the electrochemical impedance.

12. Method according to claim 11, wherein the layer of adhesive is provided selectively on the metal pattern.

13. Method according to claim 11 or 12, wherein the adhesive is chosen from the group consisting of epoxy based adhesives, polyurethane based adhesives, acrylic based adhesives, cyanoacrylate based adhesives, or combinations thereof.

14. Method according to any one of claims 11-13, wherein the adhesive has a viscosity of at least 1 Pa·s at 20 °C, preferably at least 10 Pa·s at 20 °C, as measured by viscosimetry.

15. Method for measuring the corrosion speed of an uncoated metal substrate comprising
- attaching the mountable electrode of the invention onto a metal substrate with a layer of adhesive;
- removing the carrier by dissolving the water-soluble layer; and
- determining the corrosion speed of said substrate by measuring the electrochemical impedance.

16. Method according to any one of claims 11-15, wherein said coated metal substrate or said uncoated metal substrate is part of a pipeline, piping, a ship hull, a pressure tank, a fuel tank, a ballast tank, a wind farm, sheet piling, a bridge, or a flood gate.

17. Method according to any one of claims 11-16, wherein said method is performed *in situ.*

18. Apparatus for measuring electrochemical impedance spectroscopy of optionally coated metal substrates, said apparatus comprising at least one mountable electrode according to any one of claims 1-7.

19. Use of a mountable electrode according to any one of claims 1-7 as an electrode in electrochemical impedance spectroscopy.
